# EUROPEAN PATENT APPLICATION

(11) **EP 0 982 731 A2**
(43) Date of publication of application: **01.03.2000**
(21) Application number: 99306077.1
(22) Date of filing: 30.07.1999
(51) Int. Cl.: G11B 27/30, G11B 27/11, G11B 27/10, G11B 15/02, G11B 15/087, G11B 23/30, G11B 27/34, H04N 5/782, H04N 7/088, H04N 5/775

(54) **Recording and playback apparatus arranged to manage contents recorded in a plurality of recording media**

(30) Priority: 20.08.1998 JP 23382398
(71) Applicant: Hitachi, Ltd., Chiyoda-ku, Tokyo 101 (JP)
(72) Inventor: Fujita, Kouji, Yokohama-shi, Kanagawa (JP); Nishijima, Hideo, Ibaraki (JP); Ohno, Shoji, Ibaraki (JP); Ohta, Hisashi, Copo Hashikabe No 202, Ibaraki (JP)
(74) Representative: Calderbank, Thomas Roger

(57) **Abstract**

A recording and playback apparatus having a library function such as displaying at a glance contents of recordings in a plurality of recording media or fast retrieval of a desired image, capable of making the foregoing library function effective even between different recording and playback apparatuses will be provided.

Information signals on contents of recording are recorded in both a first recording medium (magnetic tape (83)) and a second recording medium (information signal storing semiconductor memory (10)) built into the recording and playback apparatus. When the first recording medium (83) is identified on retrieval, the information signals in question are read out from the second recording medium (10) for displaying. If the information in question is not present, the information signals are played back from the first recording medium (83) to write them in the second recording medium (10). Also, information signals stored in one recording and playback apparatus are copied onto the other recording and playback apparatus through the first recording medium (83), thus sharing the library function.

## Description

The present invention relates to a recording and playback apparatus which manages contents recorded in a plurality of recording media (for example, magnetic tape), and which facilitates management and retrieval of contents of a recording medium recorded.

A VTR intended for home use or for private use is generally used by videotaping desired video received by a TV set and playing back. Increase in recorded tapes, however, makes it difficult for the information about desired video such as where the recorded position is in a videotape, which videotape the video is recorded in and what the contents of the video is, to be obtained.

In a word, title, a method of writing titles, comments or the like of contents of recordings on the surface of a cassette has conventionally been used. In the normal method of use, however, it is difficult to retrieve a recorded position of a tape in which desired video is recorded even if the tape which should be played back is found out.

In a VHS-VTR, VISS (VHS Index Search System) is known as a system, which performs immediate access to a specific picture for playback. This system rewinds or fast forwards the tape while counting a number of a start-locating signal recorded in the tape to play back the tape from a position in which the desired counted number is reached.

Also, as technique of displaying contents of recordings of a tape inserted into a VTR on the screen, there is one specified in Japanese Patent Laid-Open Application No.5-36251. This technique is such that contents of recordings for each tape are stored in a memory attached to the VTR, a tape number is identified with a bar code label pasted to each tape during playing back, and the contents of recordings of the tape are read out from the memory to be displayed on the screen, thus locating the start of the video using the above-described VISS system.

According to the technique specified in Japanese Patent Laid-Open Application No.6-309848, tape management information (for example, tape number, apparatus number, record-starting time, termination time, contents of recordings, etc.) is recorded on the tape, and further the management information is also recorded in a memory attached to the VTR. During playback, the tape number in question is identified through the management information from the tape, and the contents of the recordings of the tape in question are called from the memory to display on the screen, thus locating the start of the video by the use of the above-described VISS system.

Like these tape management systems, a VTR is provided with, for example, a memory, and management information for contents recorded in a tape is stored in the memory, whereby the management information of the tape in question can be read out. This library function of one sort is effective particularly for such a sequential recording medium as magnetic tape. The above-described library function is also effective for a disk-shaped recording medium (random-accessible recording medium).

In the above-described technique, however, the technique of managing a tape by pasting a label having contents of recordings written thereon on a cassette is troublesome, and moreover, it will be necessary to rewrite the label if you record it over again. Also, in the case of locating the start of a tape by the use of a method such as VISS, it is necessary to keep in mind how many video there are before the desired video on the tape or to write it on a label, and there is the problem that it has inferior usability.

In the technique disclosed in the Japanese Patent Laid-Open Application No.5-36251, a mechanism or a circuit for reading the bar code is required, and there is the problem that the cost is increased. Also, in the technique disclosed in the Japanese Patent Laid-Open Application No.6-309848, the tape management information, which is stored in a memory attached to the VTR and is stored in the tape, is effective only when it is recorded in the VTR in question, and as regards tape recorded in any other VTRs than the VTR, there is the problem that the foregoing library function cannot be used.

Further, when the user buys a new VTR additionally, there is the critical problem that the new VTR cannot inherit the library function of the old VTR.

It is an object of the present invention to solve the conventional technical problems and provide a recording and playback apparatus capable of owning the library function jointly between the VTR and another VTR.

In this respect, in order to illustrate the present invention, the description has been made of a case where magnetic tape is used as the recording medium, and the present invention is not limited thereto.

In order to achieve the above-described object, a recording and playback apparatus for recording and playing back a video signal and an information signal into a first recording medium comprises, according to the present invention,:
recording medium identifying means for identifying the first recording medium; means for writing the information signal into a second recording medium; means for reading out the information signal from the second recording medium; and means for outputting to a display unit the information signal read out from the second recording medium, wherein
if identification result of the recording medium identifying means could be checked against contents recorded in the second recording medium, the information signal is read out from the second recording medium to output it to the display unit, and if the identification result of the recording medium identifying means could not be checked against contents recorded in the second recording medium, the information signal played back from the first recording medium is written into the second recording medium.

The structure is arranged such that information signals of a plurality of first recording media are written in the second recording medium, that there are provided selecting means for selecting a desired first recording medium from the plurality of first recording media displayed on the display unit, and means for recording the information signal of the first recording medium selected by the selecting means in one or more areas of the first recording medium, and that an information signal played back from the first recording medium is written in the second recording medium.

The first recording medium is magnetic tape or a disk-shaped recording medium, and the second recording medium is a first semiconductor memory or a disk-shaped recording medium.

The recording medium identifying means is structured so as to identify through an information signal played back from the first recording medium, or to use a second semiconductor memory attached to the first recording medium, a magnetic label or a bar code label.

The recording medium identifying means is structured to have, if the information signal cannot be detected from the first recording medium, means for outputting that effect.

The structure is arranged such that of information signals written in the second recording medium, an information signal, which has not been read out for a predetermined time period or more, is automatically erased.

Further, according to the present invention, there is provided a recording and playback apparatus for recording and playing back a video signal, an audio signal, an information signal and a retrieval signal into magnetic tape, comprising:
magnetic tape identifying means for identifying the magnetic tape; and means for writing and reading out the information signal into a first semiconductor memory and displaying it, wherein
if identification result of the magnetic tape identifying means could be checked against contents recorded in the first semiconductor memory, the applicable information signal is read out to output to a display unit, and if not, the information signal played back from the magnetic tape is written in the first semiconductor memory.

According to the present invention, there is provided a recording and playback apparatus, further comprising: retrieval signal detecting means for detecting the retrieval signal from the magnetic tape; and magnetic tape positioning means for causing the magnetic tape to travel to a position, in which the retrieval signal can be detected, for positioning, wherein the magnetic tape is played back from the position, in which the retrieval signal can be detected, and the information signal played back is written into the first semiconductor memory by the write means.

These and other objects, features and advantages of the present invention will become more readily apparent from the following detailed description when taken in conjunction with the accompanying drawing wherein:
Fig.1 is a block diagram showing the structure of a recording and playback apparatus according to the first embodiment of the present invention;
Fig.2 is a view showing internal structure of information signals and a recording state of information signals on a magnetic tape;
Fig.3 is a view showing internal structure of information signals and a recording state of information signals on a magnetic tape;
Fig.4 is a block diagram showing the structure of a recording and playback apparatus according to the second embodiment of the present invention;
Fig.5 is a block diagram showing the structure of a recording and playback apparatus according to the third embodiment of the present invention;
Fig.6 is a block diagram showing the structure of a recording and playback apparatus according to the fourth embodiment of the present invention;
Fig.7 is a block diagram showing the structure of a recording and playback apparatus according to the fifth embodiment of the present invention;
Fig.8 is a view showing a rebuilding operation of information signals through information signals played back from the magnetic tape;
Fig.9 is a block diagram showing the structure of a recording and playback apparatus according to the sixth embodiment of the present invention;
Fig.10 is an explanatory view illustrating the operation of the sixth embodiment of the present invention;
Fig.11 is a block diagram showing the structure of a recording and playback apparatus according to the seventh embodiment of the present invention;
Fig.12 is a block diagram showing the structure of a recording and playback apparatus according to the seventh embodiment of the present invention;
Fig.13 is a block diagram showing the structure of a recording and playback apparatus according to the eighth embodiment of the present invention; and
Fig.14 is a block diagram showing the structure of a recording and playback apparatus according to the ninth embodiment of the present invention;

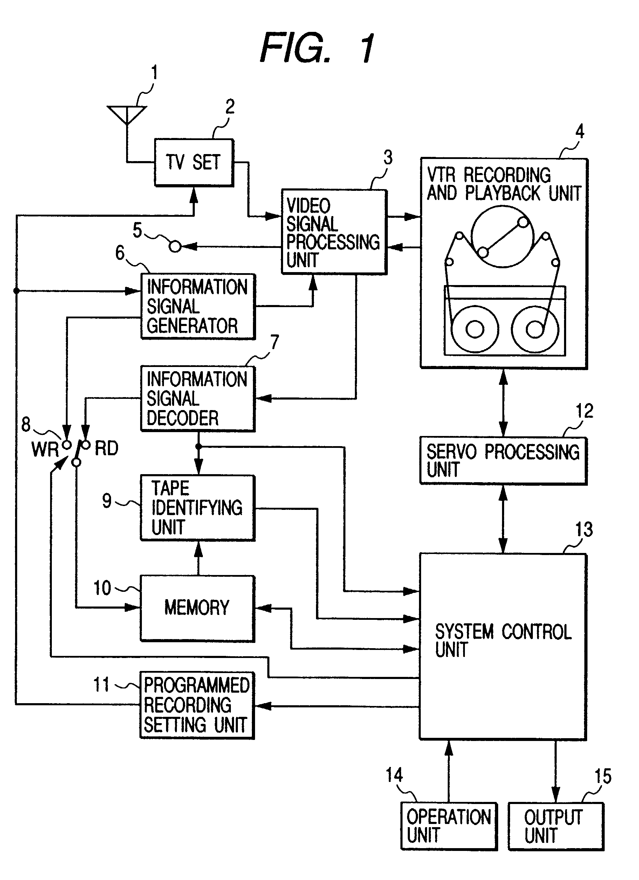

With reference to Figs.1 to 3, the detailed description will be made of a recording and playback apparatus according to a first embodiment of the present invention.

In Fig.1, a reference numeral 1 designates a receiving antenna for television broadcast; 2, a receiver for television broadcast; 3, a video signal processing unit for modulating a video signal, an audio signal, an information signal or the like into a recording signal, or decoding a playback signal; 4, a VTR recording and playback unit for recording and playing back onto magnetic tape by a helical scanning system; 5, a terminal, from which a playback signal for a video signal or an audio signal is outputted; 6, an information signal generator for generating information signals such as information including recording conditions such as machine ID, a date of recording, record-starting time, record-ending time, a television channel and a recording mode, and time code information; 7, an information signal decoder for decoding an information signal played back from a tape; 8, a switch unit for switching a state of writing the information signal into a memory or a state of reading out from the memory; 9, a tape identifying unit for identifying the tape from an information signal played back and an information signal stored in an information signal storing semiconductor memory 10; 11, a setting unit for programmed recording for television broadcast; 12, a servo processing unit for controlling tape-driving in a VTR recording and playback unit 4; 13, a system control unit for controlling the operation of the entire apparatus; 14, an operating unit; and 15, a output unit.

First, the operations of each function block will be described. A television broadcast is received by an antenna 1, and a decoding operation and channel setting of a television broadcast signal are performed by a TV set 2 to output a video signal, an audio signal and a character information signal (signal of character broadcasting and the like). The video signal, the audio signal and the character information signal are modulated by the video signal processing unit 3 to be recorded in magnetic tape by the VTR recording and playback unit 4. The VTR recording and playback unit records and plays back into magnetic tape in an oblique helical track shape by a rotary magnetic head like a conventional VHS-VTR, 8 mm-VTR or the like, and the detailed description will be omitted here. A signal played back from the tape is decoded by the video signal processing unit 3, and is converted into the original video signal, audio signal, and character information signal to be outputted through the output terminal 5.

Subsequently, the description will be made of the operation on programming recording. From the operating unit 14, desired recording programming information (channel, recording date and time, recording-starting time, recording-ending time, program genre, recording mode and the like) is inputted. The recording programming information is stored in the programmed-recording setting unit 11 through the system control unit 13. The recording programming information thus stored is sent out to the information signal generator 6 and the TV set 2. In the TV set 2, the channel is selected in accordance with the recording programming information, and the system control unit 13 sends out a command to start a recording operation of the VTR recording and playback unit 4 to the servo processing unit 12 in accordance with the recording programming information, whereby the VTR recording and playback unit 4 starts the recording operation.

The information signal generator 6 adds an apparatus ID, a tape number, a time code, parity and the like to the foregoing recording programming information to send out to the video signal processing unit 3 and the information signal storing semiconductor memory 10 as an information signal. In this respect, in the switch circuit 8, the contact is normally switched to the WR side. The video signal processing unit 3 multiplexes the information signal onto vertical retrace line interval of the video signal, and the VTR recording and playback unit 4 repeatedly records in all areas in which the video signals in the magnetic tape are recorded. In this respect, a multiplex system for information signals does not have to be limited to the system of multiplexing onto the vertical retrace line interval of video signals, but, for example, a system of recording into a predetermined portion on helical tracks of a magnetic tape may be used, or recording may be performed in a predetermined portion of magnetic tape in the longitudinal direction. The information signal storing semiconductor memory 10 stores the information signal on receipt of a command from the system control unit 13.

The description will be made of the operation at the time of playback. A playback signal played back from the VTR recording and playback unit 4 is decoded by the video signal processing unit 3, an information signal multiplexed onto the vertical retrace line interval is extracted, and the information signal is sent out to the information signal decoder 7. The information signal decoder 7 decodes the information signal (the recording programming information, apparatus ID, tape number, time code, parity and the like) to send out the information signal thus decoded to the tape identifying unit 9. The tape identifying unit 9 identifies the tape from, for example, the apparatus ID and the tape number information of the information signal.

The tape identification results are sent out to the system control unit 13 to check whether or not an information signal corresponding to the tape is present by checking against the information signal storing semiconductor memory 10. If it could be checked, the information signal in the information signal storing semiconductor memory 10 will be sent out to the system control unit 13 through the tape identifying unit 9. The system control unit 13 outputs the recording programming information (for example, channel, recording date and time, recording-starting time, recording-ending time, program genre, recording mode and the like) of the information signal to the output unit 15. Thus, the user can grasp the contents of recordings of the tape immediately. Also, in the information signal storing semiconductor memory 10, information signals in a plurality of tape recorded by the recording and playback apparatus are all managed for each tape and recorded. Therefore, the contents of recordings in the plurality of tape can be grasped by the output unit 15.

As described above, the function (hereinafter, referred to as library function) of managing the magnetic tape recorded through the use of the information signal is very useful particularly for sequential recording media such as magnetic tape.

Even in the case of a disk-shaped recording medium such as, for example, a hard disk, a magneto-optical disk, and a phase-change optical disk to be used in place of the foregoing magnetic tape, the method of recording an information signal (library information) for managing the recording medium within the main apparatus is effective, and the library function is likewise applicable to any of the recording media.

It goes without saying that the information signal stored in a memory within the recording and playback apparatus is effective for a combination (self recording and playback) between the recording and playback apparatus in question and a magnetic tape recorded by the recording and playback apparatus in question. Furthermore, according to the present invention, when a magnetic tape recorded by another recording and playback apparatus is played back, or even when the user additionally buys a new recording and playback apparatus, an information signal within the memory and an information signal on the magnetic tape are made effective.

Therefore, in the first embodiment according to the present invention, the result (for example, apparatus ID number, tape number and the like) obtained by identifying from an information signal played back from the magnetic tape is checked against the information signal within the information signal storing semiconductor memory 10, and if there is no information signal of the tape in question (if checking cannot be made) within the information signal storing semiconductor memory 10, a command is sent out from the tape identifying unit 9 to the system controller 13 to write the information signal on the magnetic tape in question in the information signal storing semiconductor memory 10. In other words, the VTR recording and playback unit 4 plays back the tape in question to additionally record the information signal thus played back into the information signal storing semiconductor memory 10 through the switch circuit 8.

Thus, even in any other combinations than a combination between the recording and playback apparatus in question and a magnetic tape recorded by the recording and playback apparatus in question, the information signal of the tape can be rebuilt by writing the information signal of the magnetic tape into the memory. In other words, in the case of playing back a magnetic tape recorded by another recording and playback apparatus, or even when the user additionally buys a new recording and playback apparatus, the existing library function can be utilized as it is since the next playback operation, and therefore, the effect is great.

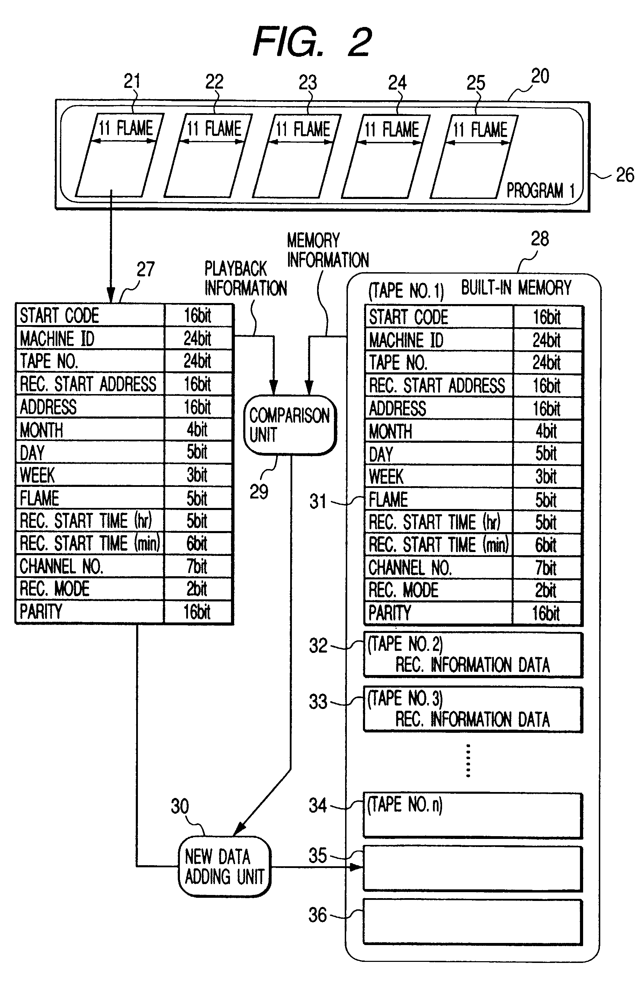

With reference to Fig.2, the description will be made of information signals recorded in the magnetic tape and the memory. A reference numeral 20 designates a magnetic tape; 21 to 25, information signal blocks; 26, a source (program); 27, information signals recorded on the tape; 28, a memory within the recording and playback apparatus; 29, a comparison unit; 30, a new data adding unit for additionally recording an information signal; 31 to 34, information signals for each tape; and 35 to 36, memory space areas.

In the first embodiment according to the present invention, there has been adopted a system of recording the same data for information signals on the magnetic tape and information signals of the information signal storing semiconductor memory 10. This is because, in the present invention as described above, if the tape number cannot be checked against, the information signals of the magnetic tape are written in the memory to rebuild the library function, and therefore it is preferable that the magnetic tape and the memory record the same data. If, however, the tape number can be checked, it is not necessary to do so. For example, the information signal recorded into the magnetic tape may be used as a part of the information signals to be recorded in the memory. More specifically, even if the information signal recorded in the magnetic tape is supposed to be only the machine ID and tape number, which are minimum requirements, the other information can be quoted from the information signals within the memory which can be checked with the tape number in question.

Information signals recorded in the magnetic tape and the memory will be described in detail. The information signals are, as shown in, for example, 27 of Fig.2, composed of Start Code, Machine ID, Tape number discrimination information, Absolute address at recording starting-point (such as time code signal), Absolute address during recording, Recording-starting month/day/day of the week information, Frame information, Recording-starting hour information, Recording-starting minute information, Recording channel information, Recording mode information, Parity information and the like. This is an example, and may be further added with another information. As regards these information signals, for example, 11 frames are recorded as one block of the information signals in the magnetic tape 20, and this block is repeatedly recorded thereafter. In this respect, information (time code signal) indicating position of the tape is sequentially updated. The number of frames constituting the block is set to 11 frames for explanation, but it is not necessary to limit to this number.

The tape 20 shown in Fig.2 shows a state in which information signals concerning the program 1 have been repeatedly recorded every 11 frames. One block of the information signals is repeatedly recorded in all areas in which the video signals within the magnetic tape are recorded.

On the other hand, the information signals are stored for each tape in the built-in memory 28 of the recording and playback apparatus as in the case of the foregoing block. During playback, it is judged by the comparison unit 29 whether or not there are, in the memory 28, information signals corresponding to the machine ID and the tape number within the information signals on the tape, and if there are no information signals corresponding to the tape, the contents of the information signals 27, which are currently played back, are additionally recorded in the memory space area 35 by the new data adding unit 30.

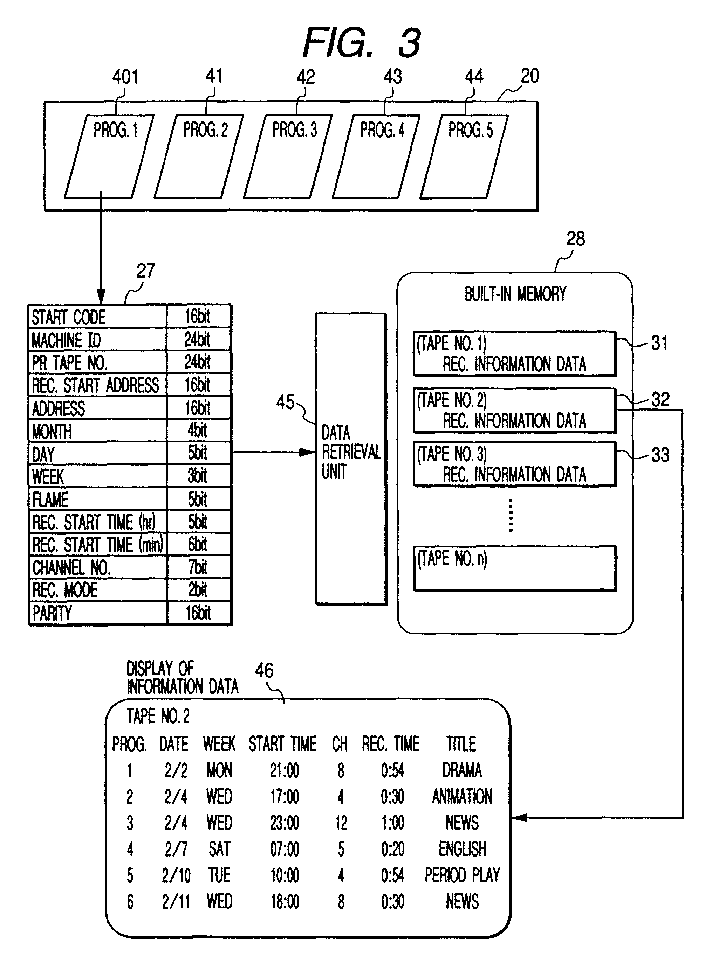

Next, display at a glance of source (program) recorded on the tape will be described with reference to Fig.3. Reference numerals 40 to 44 designate programs recorded; 45, data retrieval unit; and 46, an example of display at a glance of contents of the tape. Likewise, the information signals 27 for each of the programs 40 to 44 are repeatedly recorded on the tape. Also, the information signals (name in the figure: various recording condition data) for each tape are likewise stored in the built-in memory of the recording and playback apparatus. When, for example, the program 1 has been played back, first from the machine ID and the tape discrimination information within the information signals 27, the information signals corresponding to the tape are retrieved and quoted from the memory by the data retrieval unit 45. Thus, as shown in, for example, an example of display 46 of information data, consecutive numbers for programs, recording dates, recording-starting time, TV broadcast channels, recording hours, genre and the like are displayed at a glance. In this respect, the contents of monitor display are not limited to what described here, but recording conditions, a number of times for playback, whether or not played back, and the like can be also displayed.

Also, in the memory 28, tape information signals for all reels of tape recorded by the recording and playback apparatus are stored. Therefore, even if information (tape number, title, comments, recording condition, a number of times for playback, whether or not played back, and the like) is not played back for each tape each time, the information can be displayed at a glance immediately.

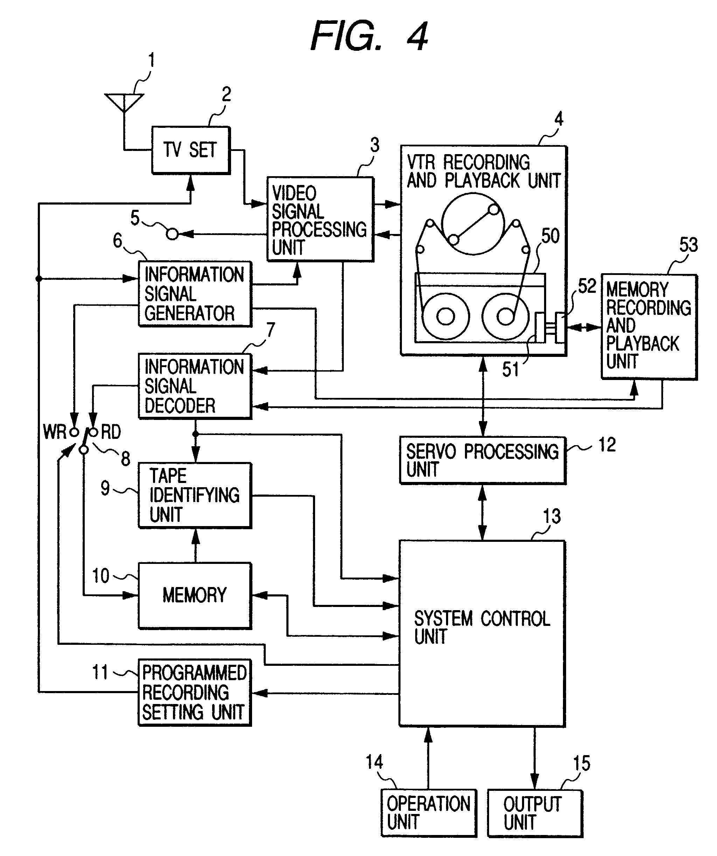

The description will be made of a recording and playback apparatus according to a second embodiment of the present invention. Fig.4 is a block diagram showing the structure of the second embodiment, and portions identical to those in the foregoing first embodiment are designated by the identical reference numerals, and detailed description thereof will be omitted.

In Fig.4, a reference numeral 50 designates a cassette; 51, a memory; 52, a memory interface; and 53, a memory recording and playback unit. In the second embodiment, the information signals recorded on the tape described in the first embodiment are stored in a cassette semiconductor memory 51 placed in a cassette 50 to thereby perform library management of the tape. In other words, as a different portion from the foregoing first embodiment, a part or all of information signals to be recorded on the tape are recorded on the tape, and at the same time, are recorded and played back into the cassette semiconductor memory 51 placed in the cassette.

On the magnetic tape, information signals are multiplexed onto video signals and recorded as in the case of the first embodiment, and the following operation is the same as in the foregoing first embodiment, the description of which is omitted.

In order to check the information signals of the tape against the information signals of the information signal storing semiconductor memory 10 built in the recording and playback apparatus, information signals such as at least the machine ID and the tape number are recorded in the cassette semiconductor memory 51 placed in the cassette. Thus, the capacity of the cassette semiconductor memory 51 is reduced, and the information signals corresponding to the tape are read out from the information signal storing semiconductor memory 10 without playing back the tape, whereby the contents of the tape can be displayed at a glance.

On the other hand, the high-capacity of the cassette semiconductor memory 51 is able to store, in the cassette semiconductor memory 51, all the information signals (Start Code, Machine ID, Tape number discrimination information, Absolute address at recording starting-point (such as time code signal), Absolute address during recording, Recording-starting month/day/day of the week information, Frame information, Recording-starting hour information, Recording-starting minute information, Recording channel information, Recording mode information, Parity information and the like) described in the foregoing first embodiment, and to display the contents of the tape at a glance from the cassette semiconductor memory 51 without playing back the tape. The display at a glance of the contents of each tape can be performed as in the case of the first embodiment.

The flow of signals in the second embodiment will be described. In this respect, the description of the same portions as in the first embodiment will be omitted. An information signal generated by the information signal generator 6 is sent out to the memory recording and playback unit 53, and is stored in the cassette semiconductor memory 51 through the memory interface 52. When the cassette 50 is mounted to the recording and playback unit 4, the information signal of the cassette semiconductor memory 51 is read out by the memory recording and playback unit 53 through the memory interface 52 to be sent out to the information signal decoder 7.

According to the second embodiment as described above, the tape identification information stored in the cassette semiconductor memory 51 placed into the cassette or the information signal indicating the contents of the tape is recorded and played back, whereby the information signal (information indicating the contents of the tape) of the information signal storing semiconductor memory 10 within the recording and playback apparatus can be read out immediately without playing back the tape to be displayed on the display unit, and its effect is significant.

In other words, in the first embodiment, since a tape number and the like are recorded on the tape, the tape number is detected after processes of tape loading → computation of an amount of wound tape → playback at the time of cassette insertion, and it takes time. In contrast, in the second embodiment, it is possible to record (1) only the tape number, (2) information signals for one reel of the tape or (3) information signals for a plurality of tape in the cassette semiconductor memory 51. In any of these instances, it is possible to recognize the tape number immediately without playing back the tape, and to read out the corresponding information from the information signal storing semiconductor memory built into the apparatus as required.

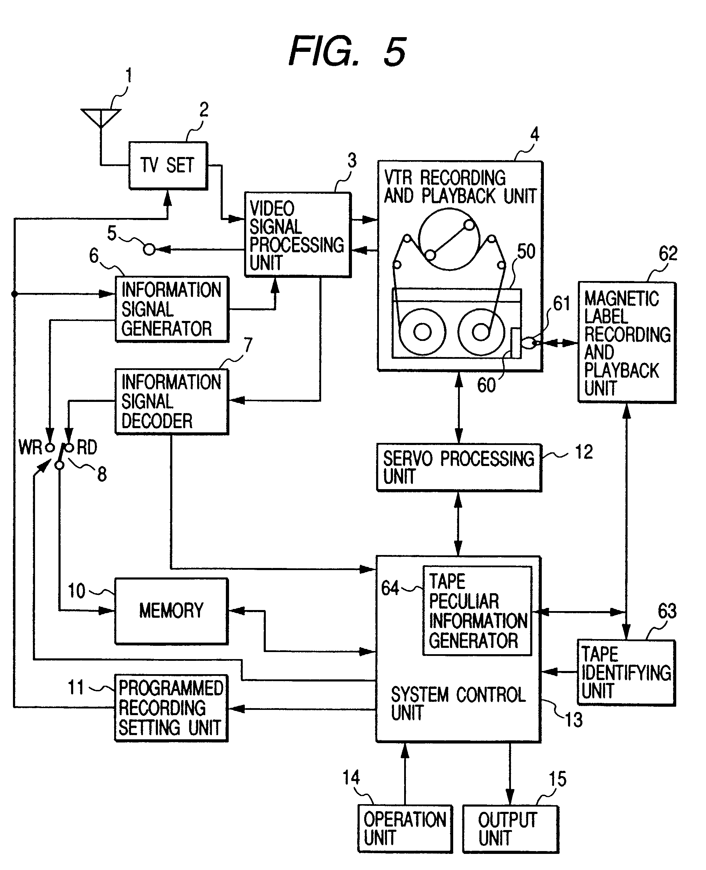

The description will be made of a recording and playback apparatus according to a third embodiment of the present invention. Fig.5 is a block diagram showing the structure of the third embodiment, and portions identical to those in the foregoing first embodiment are designated by the identical reference numerals, and detailed description thereof will be omitted.

In Fig.5, a reference numeral 60 designates magnetic label; 61, a magnetic label recording and playback head; 62, a magnetic label recording and playback unit; 63, a tape identifying unit; and 64, a tape peculiar information generator. In the third embodiment, tape identification information (such as, for example, tape number and machine ID) is recorded and played back on the magnetic label 60 pasted to the cassette 50, and information signals corresponding to the foregoing tape identification information obtained from the magnetic label 60 are read out from the foregoing information signal storing semiconductor memory 10 to display on the display unit. In this respect, as in the case of the first embodiment, a part or all of the information signals are recorded on the magnetic tape. Here, correspondences between the contents of the information signal storing semiconductor memory 10, in which information signals indicating the contents of the tape have been stored, and the tape identification information recorded on the magnetic label 60 will be described below.

With reference to Fig.5, the operation will be described along the flow of a signal. When the cassette 50 is inserted into the VTR recording and playback unit 4, the tape identification information on the magnetic label 60 is played back by the magnetic label recording and playback head 61, and the tape identification information is sent out to the tape identifying unit 63 through the magnetic label recording and playback unit 62. At this time, if the foregoing tape identification information is not played back (when the tape has not been recorded yet), tape identification information (such as, for example, tape number and machine ID) is generated from the tape peculiar information generator 64, and the tape identification information is recorded on the magnetic label 60 by the magnetic label recording and playback head 61 through the magnetic label recording and playback unit 62.

If the foregoing tape identification information is played back (a recorded tape), tape identification information on the magnetic label 60 is decoded by the tape identifying unit 63 to be sent out to the system control unit 13. Hereinafter, information signals of the tape corresponding to the tape identification number are read out from the information signal storing semiconductor memory 10 to output at a glance the contents of the tape on the output unit 15.

According to the third embodiment as described above, tape identification information recorded on the magnetic label pasted on a cassette is recorded and played back, whereby it is possible to read out the information signals (information indicating the contents of the tape) of the memory 10 within the recording and playback apparatus for displaying on the display unit immediately.

According to the third embodiment, it is possible to obtain the above-described tape identification information by only reading the magnetic label without playing back the magnetic tape. There is a significant effect that the information signal can be obtained from the information signal storing semiconductor memory 10 by quoting this tape identification information. Further, if the information signals of the tape in question cannot be obtained from the information storing semiconductor memory, the information signals on the tape can be played back as in the case of the first embodiment to be stored in the information signal storing semiconductor memory 10, and there is a significant effect that such an operation can be effected immediately.

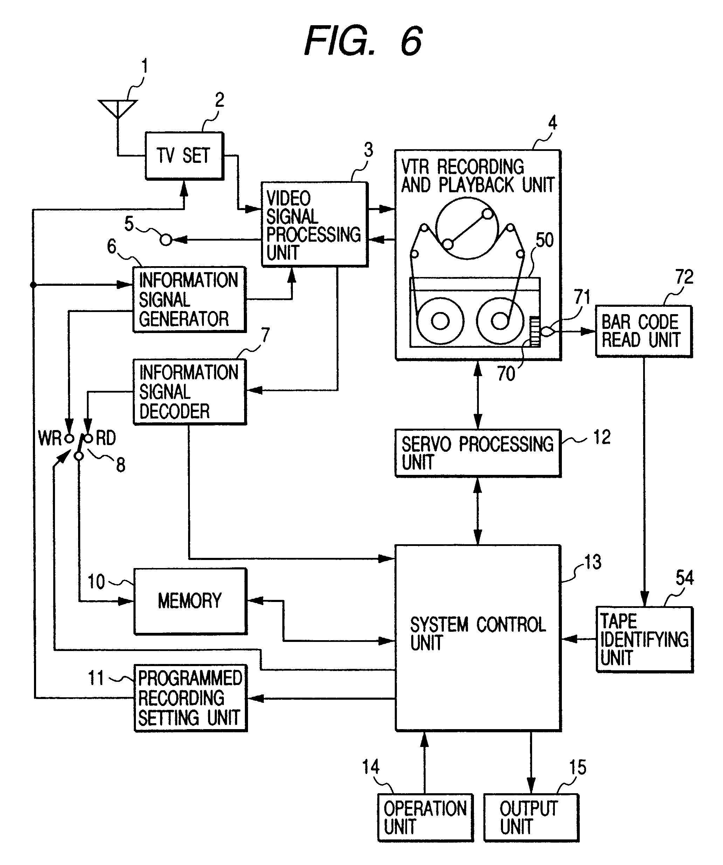

The description will be made of a recording and playback apparatus according to a fourth embodiment of the present invention. Fig.6 is a block diagram showing the structure of the fourth embodiment, and portions identical to those in the foregoing first embodiment are designated by the identical reference numerals, and detailed description thereof will be omitted.

In Fig.6, a reference numeral 70 designates bar code label on which a bar code indicating tape identification information (tape number, machine ID) has been printed; 71, a bar code label read head; and 72, a bar code read portion. In the fourth embodiment, on the basis of tape identification information obtained from the bar code label 70 pasted onto the cassette 50, information signals corresponding to the tape are read out from the information signal storing semiconductor memory 10 to display at a glance the contents of the tape.

In the fourth embodiment, as in the case of the first embodiment, information signals are recorded on a tape, and discrimination is performed by using the bar code label 70 pasted onto, for example, a tape cassette as tape identifying means. Here, concerning correspondences between the contents of the information signal storing semiconductor memory 10, in which information signals indicating the contents of the tape are stored, and tape identification information of the bar code label 70, the operation will be described with reference to Fig.6 below.

When the cassette 50 is inserted into the VTR recording and playback unit 4, the tape identification information on the bar code label 70 is read by the bar code label read head 71 and the bar code read portion, and the tape identification information is sent out to the system control 13 after the tape number and the machine ID are identified by the tape identifying unit 54. The information signals of the tape corresponding to the tape identification number are read out from the information signal storing semiconductor memory 10 to output at a glance the contents of the tape to the output unit 15.

According to the third embodiment as described above, the bar code label containing the tape identification information is pasted onto the cassette, and the bar code label is read at the insertion of the cassette, whereby information signals corresponding to the tape identification number obtained can be read out from the memory within the recording and playback apparatus to display on the display unit immediately.

According to the third embodiment, it is possible to obtain the above-described tape identification information by only reading the bar code label without playing back the magnetic tape. There is a significant effect that the information signal can be obtained from the information signal storing semiconductor memory 10 by quoting this tape identification information. Further, if the information signals of the tape in question cannot be obtained from the information storing semiconductor memory, the information signals on the tape can be played back as in the case of the first embodiment to be stored in the information signal storing semiconductor memory 10, and there is a significant effect that such an operation can be effected immediately.

In this respect, in the foregoing first, second and third embodiments, in order to illustrate the present invention, the description has been made of the examples in which a magnetic tape is used as the first recording medium specified in the Claims, and a semiconductor memory is used as the second recording medium, but the foregoing both recording media do not have to be limited thereto, and the foregoing embodiments are effective for disk-shaped recording media (hard disk, magneto-optical disk, phase-change optical disk and the like). Accordingly, these examples are not to be construed to limit or reduce the scope of the Claims.

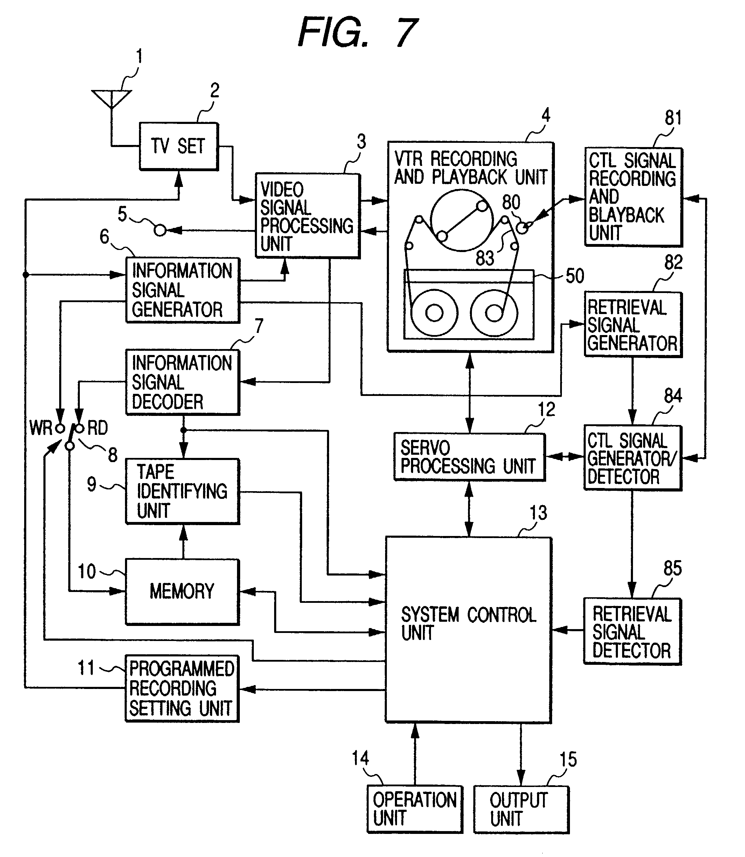

The description will be made of a recording and playback apparatus according to a fifth embodiment of the present invention. Fig.7 is a block diagram showing the structure of the fifth embodiment, and portions identical to those in the foregoing first embodiment are designated by the identical reference numerals, and detailed description thereof will be omitted.

In Fig.7, a reference numeral 80 designates a control signal recording and playback head (hereinafter, referred to as CTL head); 81, a CTL signal recording and playback unit; 82, a retrieval signal generator; 83, a tape; 84, a CTL signal generator/detector; and 85, a retrieval signal detector. The fifth embodiment is characterized by the fact that an index signal for retrieval is recorded on a tape, the index signal is used as a start-locating signal for high-speed retrieval during playback, and after positioning of the retrieval signal is completed, a predetermined length of the tape is played back to sequentially append information signals on the tape in the information signal storing semiconductor memory 10.

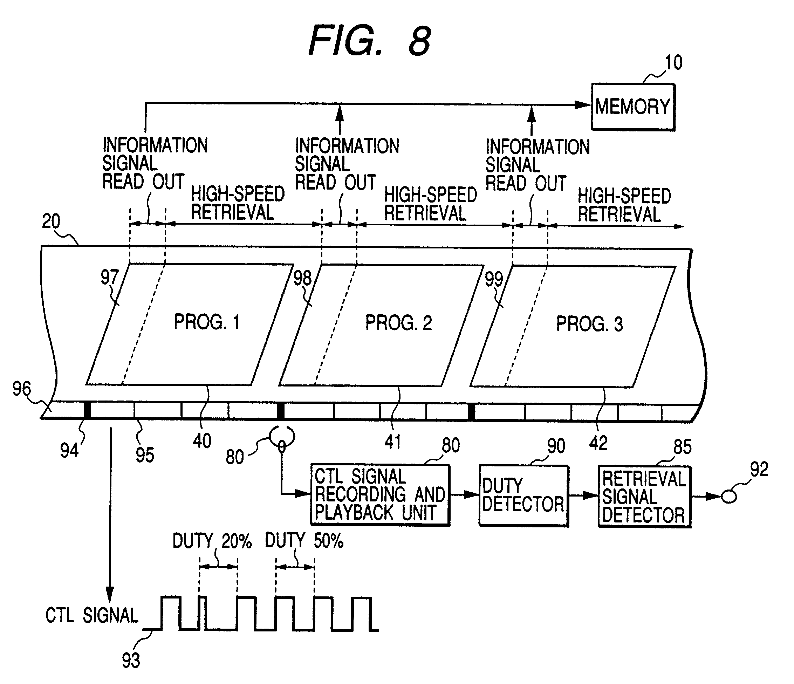

First, the retrieval signal will be described with reference to Fig.8. The description will be made of the retrieval signal by exemplifying a CTL system here, but it is not necessary to limit to this system, but another system, for example, a system of retrieving a time code or a system of recording an exclusive retrieval signal on a helical track may be used. In Fig.8, a reference numeral 90 designates a duty detector for CTL signal; 92, a terminal for outputting retrieval results; 93, a CTL signal waveform diagram; 94, retrieval CTL signal; 95, a CTL signal; 96, a CTL track; and 97 to 99, information signal read areas.

In such a recording and playback apparatus as, for example, VHS-VTR, since tape feed is controlled constant by the servo processing unit, the CTL track 96 is provided at the lower end of the tape so that CTL signals are recorded at equal intervals. The servo processing unit 12 controls tape feed so that a CTL signal played back is synchronized to a reference signal (not shown) within the servo processing unit 12. This CTL signal is normally recorded at waveform having a duty ratio of 50%. The retrieval CTL signal is distinguished from an ordinary CTL signal by setting the duty ratio of the CTL signal to, for example, 20% for recording. In Fig.8, a reference numeral 93 designates CTL waveform.

During playback, the CTL signal is played back from the tape by the CTL head 80, is amplified, and is waveform-shaped by the CTL signal playback unit, and the duty ratio of the CTL signal is measured by the duty detector 90. The retrieval signal detector 85 detects that the duty ratio is 20%, and outputs the detection result from the output terminal 92.

The description will be made of an operation for rebuilding an information signal in the information signal storing semiconductor memory 10 built into a recording and playback apparatus, which is characterized by the present invention. This operation is, as described in the first embodiment, to judge whether or not information signals corresponding to the information signals of the tape are present in the information signal storing semiconductor memory 10 when quoting the information signal from the information signal storing semiconductor memory 10 on the basis of the information signals (for example, channel, recording date and time, recording -starting time, recording-ending time, program genre, recording mode, and the like) played back from the magnetic tape. If the information signals are not present, the information signals are read from the magnetic tape to store the information signals in the information signal storing semiconductor memory 10.

In Fig.8, on all helical tracks on a recorded tape, the foregoing information signals (channel, recording date and time, recording-starting time, recording-ending time, program genre, recording mode, and the like) are multiplexed onto the vertical retrace line intervals of video signals and are repeatedly recorded in units of, for example, 11 frames. Therefore, if the information signals on the tape are played back by a predetermined number or more of frames (in this case, 11 frames), information signals corresponding to the source (program) in question can be obtained. If a plurality of sources are recorded on the tape, an operation of repeating playback of a predetermined frame from the start of each source is performed from the beginning to the end of the tape as a single unit. The information signals read from the tape by the foregoing operations are stored in the information signal storing semiconductor memory 10. The servo control unit 12 controls such that after the information signals are played back, the tape is fed at high speed to the tape position for the next retrieval signal.

With reference to the block diagram of Fig.7, the aforementioned operation will be described. First, at the time of recording, a CTL signal is generated by the CTL signal generator 84, and is recorded in the tape 83 by the CTL head 80 through the CTL signal recording unit 81. For the retrieval signal, a trigger signal is sent out from the information signal generator 6 toward the retrieval signal generator 82 to a tape position to be retrieved. The retrieval signal generator 82 sends out, to the CTL signal generator 84, a CTL signal exclusively used for retrieval, which has a different duty ratio from the CTL signal during normal recording, and the CTL signal is recorded in the tape 83 by the CTL signal generator 84, the CTL signal recording unit 81 and the CTL head 80.

At the time of playback, the CTL signal played back from the CTL head 80 is amplified and waveform shaped by the CTL signal playback unit 81 to be sent out to the CTL signal detector 84. The playback CTL signal is inputted into the servo processing unit to be used for tape feed control. Further, the CTL signal is inputted into the retrieval signal detector 85, it is discriminated whether or not it is a retrieval signal (CTL signal having a duty ratio of 20%), and the discrimination result of the detection signal is sent out to the system control unit 13. The system control unit 13 sends out a command signal to the servo processing unit 12 so as to feed the tape at high speed before the detection signal is detected. If the retrieval signal is detected while the tape is being fed at high speed, a predetermined length of the tape is played back from the detection position of the retrieval signal to play back the information signals on the tape. The information signals played back are stored in the information signal storing semiconductor memory 10 through the video signal processing unit 3, the information signal decoder 7 and the switch circuit 8.

As described above, according to the fifth embodiment of the present invention, a predetermined length of the tape is played back from a retrieval signal position on the tape, and repeated operations of feeding the tape at high speed until the next retrieval signal are automatically performed from the beginning to the end of the tape, whereby there is a significant effect that the information signals can be rebuilt in the information signal storing semiconductor memory 10 at high speed.

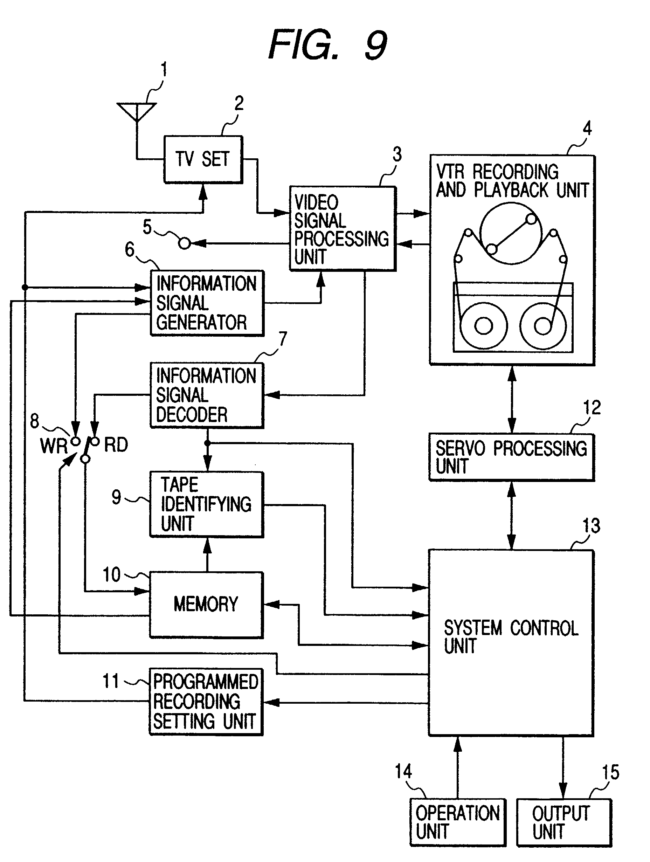

The description will be made of a recording and playback apparatus according to a sixth embodiment of the present invention. Fig.9 is a block diagram showing the structure of the sixth embodiment, and portions identical to those in the foregoing first embodiment are designated by the identical reference numerals, and detailed description thereof will be omitted. In the sixth embodiment, the contents of the information signal storing semiconductor memory 10 built into the recording and playback apparatus are recorded in a predetermined area on the magnetic tape, and the tape is played back by another recording and playback apparatus, whereby the structure is arranged such that the data of the information signal storing semiconductor memory 10 built into the foregoing recording and playback apparatus are copied onto an information signal storing semiconductor memory 10 built into the another recording and playback apparatus in question.

When a magnetic tape recorded by, for example, another recording and playback apparatus is played back, or even when the user additionally buys a new recording and playback apparatus, the object of the sixth embodiment according to the present invention is to allow information signals within the foregoing memory and information signals on the magnetic tape to be effectively used.

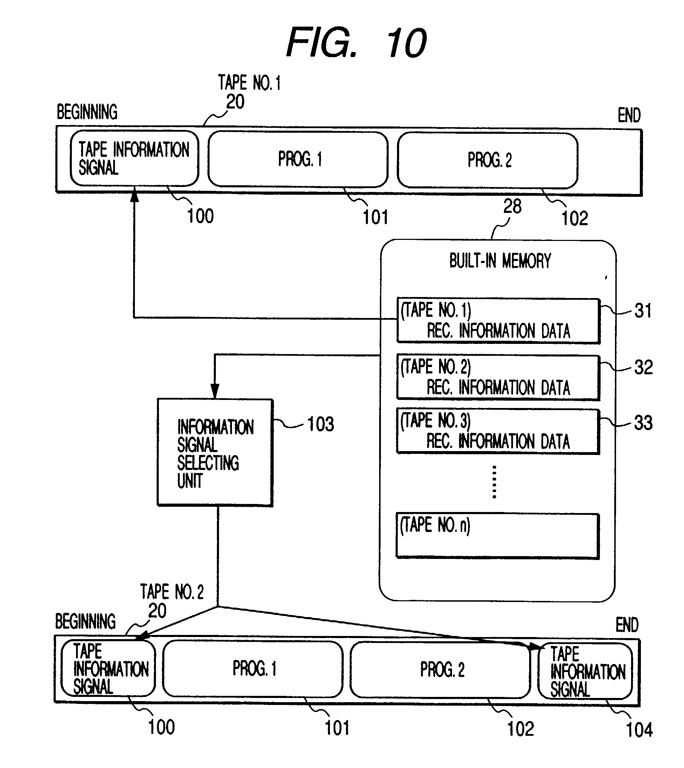

Hereinafter, with reference to Figs.9 and 10, the operation will be described. In Fig.9, information signals indicating the contents of a tape from an information signal storing semiconductor memory 10 are sent out to a video signal processing unit 3 through an information signal generator 6 to be recorded on the tape. As regards the position on the tape in which information signals are recorded, a plurality of recordings may be performed at the beginning or the end of the tape, or in the course of the tape. Here, the description will be made of an example in which recording is performed at the beginning or the end of the tape.

In the case of playing back information signals from the tape, the tape is first positioned to a portion (beginning or end of the tape) in which the information signals are recorded. When the tape positioning is completed, the playback operation is started, and the information signals on the tape are played back. The information signals thus played back are stored in the information signal storing semiconductor memory 10 through the video signal processing unit 3, the information signal decoder 7 and the switch circuit 8.

For information signals to be recorded on the tape, all the information signals included in the information signal storing semiconductor memory 10 may be recorded, but there are actually few cases where all the information signals of the tape are required for another recording and playback apparatus. Also, the capacity of the information signal storing semiconductor memory 10 is limited, and when all the information signals are additionally copied, the space area in the information signal storing semiconductor memory 10, in which information signals are stored, is reduced. Thus, the user arranged the structure such that a desired tape number is inputted from the operating unit 14, and only the information signals corresponding to the tape number in question are outputted from the information signal storing semiconductor memory 10 to record the information signals in question on the tape. In this way, it is possible to copy only the necessary information signals onto an information signal storing semiconductor memory 10 of another recording and playback apparatus.

Fig.10 shows the contents of the above-described operation. In Fig.10, a reference numeral 100 designates information signals recorded at the beginning of the tape; 101 to 102, sources (programs); 103, an information signal selecting unit for selecting the information signals corresponding to a tape number set by the user; and 104, information signals recorded at the end of the tape. A tape No.1 in Fig.10 shows a state in which information signals at tape No.1 of the memory 28 are recorded at the beginning of the tape. Also, tape No.2 shows a state in which of information signals of memory 28 at the beginning and end of the tape, the information signals corresponding to tape No. designated by the user are selected by the information selecting unit 103 and recorded.

As described above, information signals in a memory built into one recording and playback apparatus are recorded in a magnetic tape, and these information signals are played back by the other recording and playback apparatus to be stored in a memory of the other apparatus, whereby there is a significant effect that the use of information signals can be shared between different recording and playback apparatuses.

Also, a copy-only tape for the above-described information signals is prepared, and for example, a copying-control signal for automatically performing a copying operation is recorded on the copy-only tape in question, and the tape in question is only inserted, whereby the structure can be arranged such that after the foregoing copying-control signal is automatically detected, information signals are automatically copied from the information signal storing semiconductor memory 10 to a tape. Further, by only inserting the tape into another recording and playback apparatus, it may be possible to arrange the structure such that the tape is automatically played back to copy the information signal in question onto the information signal storing semiconductor memory 10.

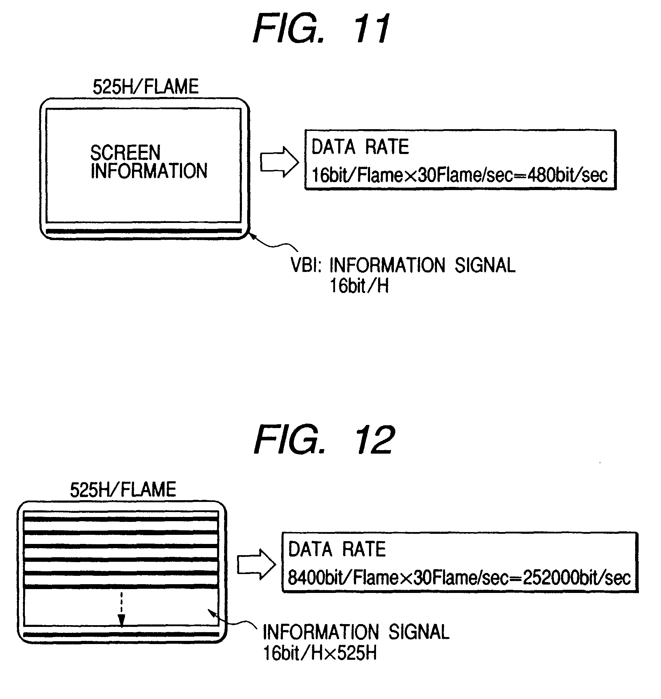

The description will be made of a recording and playback apparatus according to a seventh embodiment of the present invention. Figs.11 and 12 are views showing a state of video signals multiplexed on information signals in the seventh embodiment. As described in the first embodiment, for the information signals, there is adopted a system of dividing information signals on one horizontal period (1 H) of vertical retrace line interval portion of video signals for recording. However, the capacity capable of recording information signals is small (for example, 16 bits) only in the 1 H interval, and the data rate of information signals for recording and playback is (16 bits/frame) × (30 frames/sec)= (480 bits/sec) . If information signals for one reel of tape are assumed to be, for example, 640 bits, it takes 1.3 seconds to record and play back information signals for one reel of tape. For information signals for 100 reels of tape, the recording and playback time for them is 130 seconds, and the copying time becomes long, providing inferior usability.

Thus, in the present embodiment, the structure was arranged such that all the video signals are replaced with the foregoing information signals for recording as shown in Fig.12. In other words, information signals of, for example, 16 bits/H are recorded on 525 H of video signals, whereby the data rate of the information signals for recording and playback becomes (16 bits × 525/frame) × (30 frames/sec)=(252000 bits/sec). According to this system, copying of information signals for 100 reels of tape can be completed in only 0.25 second. A process of multiplexing such information signals as described above onto video signals is performed by the video signal processing unit 3 of Fig.9. When all the video signals are replaced with information signals here, for example, an unpleasant striped pattern or the like appears on the screen, and therefore, another screen information (for example, OSD screen for notifying that information signals are being copied) is caused to be displayed on the display unit in advance.

As described above, according to the seventh embodiment of the present invention, information signals are replaced with video signals for recording, whereby the recording and playback speed of information signals can be increased, and there is the effect that copying of information signals can be performed immediately.

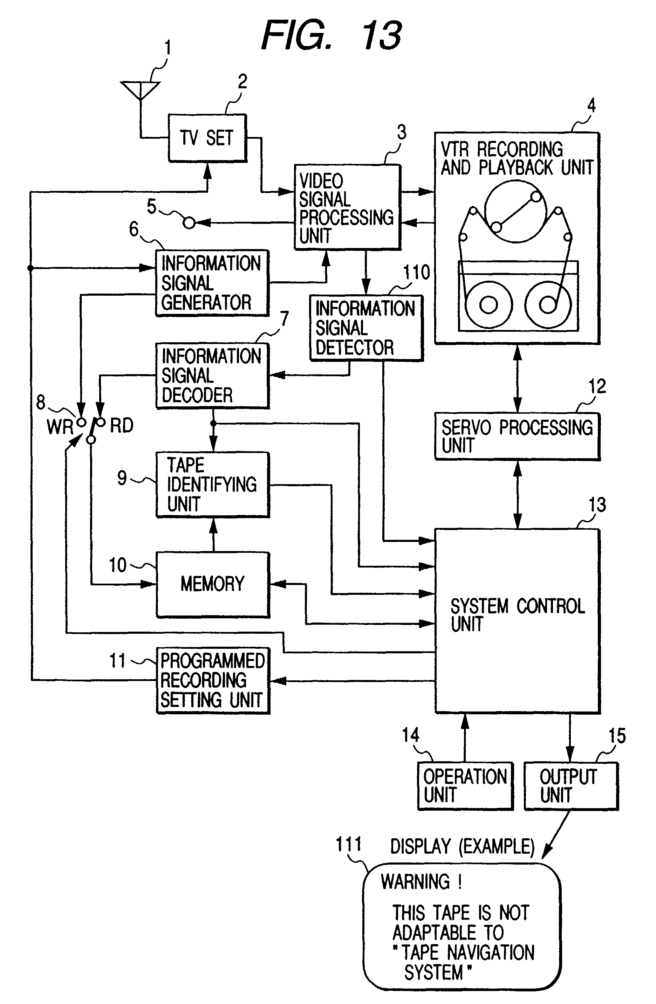

The description will be made of a recording and playback apparatus according to an eighth embodiment of the present invention. Fig.13 is a block diagram showing the structure of the eighth embodiment, and portions identical to those in the foregoing first embodiment are designated by the identical reference numerals, and detailed description thereof will be omitted.

In Fig.13, a reference numeral 110 designates an information signal detecting unit for detecting the presence or absence of information signals; and 111, an example of monitor display. A tape to be played back is not always a tape containing information signals described in the first embodiment of the present invention. In order to cope with such a tape, the object of the eighth embodiment is, when a tape having the foregoing information signals not recorded thereon is played back, to display to that effect. In the present embodiment, playback signals from the video signal processing unit 3 are sent out to the information signal detecting unit 110, and the information signal detecting unit 110 discriminates whether or not information signals are recorded on the tape. The discrimination signal is sent out to the system controller 13, and if the information signals are not present, it warns and displays on the display unit that the tape is a tape un-adaptable to information signals.

With such structure as described above, when the contents of the tape are not displayed at a glance, the user can learn immediately whether the cause is system trouble or that the recorded tape is un-adaptable to information signals.

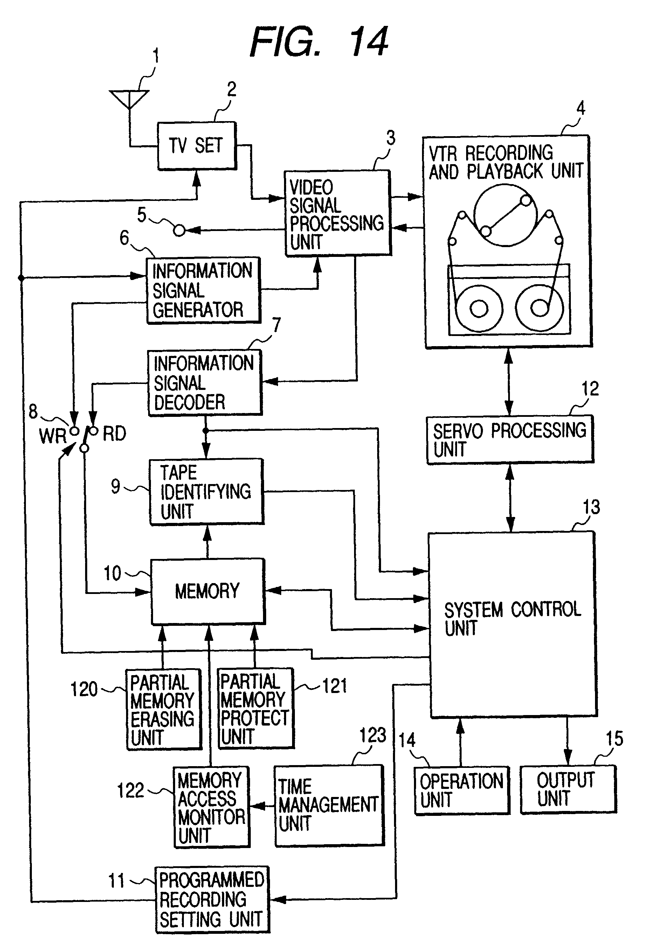

The description will be made of a recording and playback apparatus according to a ninth embodiment of the present invention. Fig.14 is a block diagram showing the structure of the ninth embodiment, and portions identical to those in the foregoing first embodiment are designated by the identical reference numerals, and detailed description thereof will be omitted.

In Fig.14, a reference numeral 120 designates a partial memory erasing unit; 121, a partial memory protect unit; 122, a memory access monitor unit; and 123, a time control unit. The object of the ninth embodiment is, when the information signals in the information signal storing semiconductor memory 10 have not been read out for a predetermined period of time or more, to automatically erase the data of information signals corresponding to the information signal storing semiconductor memory 10 recording and playback. In this way, overflow of the information signal storing semiconductor memory 10 can be avoided. The memory access monitor unit 122 monitors whether or not the data of the information signal storing semiconductor memory 10 have been read out. The foregoing monitor operation is performed every a fixed time period by the time control unit 123, and it is detected whether or not there exists a non-access information data portion for a predetermined period or more in the information signal storing semiconductor memory 10. If there existed a non-access information data portion for a predetermined period or more in the information signal storing semiconductor memory 10, the information data in question within information signal storing semiconductor memory 10 are partially erased by the partial memory erasing unit 120.

Also, the structure was arranged such that in order to prevent important information data from being erased by the foregoing automatic erase function, the information data designated by the user are partially protected by the partial memory protect unit 121.

According to the ninth embodiment of the present invention, since if the information data within the information signal storing semiconductor memory 10 have not been used for a predetermined time period or more, automatic erase can be performed, it is possible to prevent the information signal storing semiconductor memory 10 from overflowing. Also, as regards the important information data for the user, since information data for each tape number are protected, they are not erroneously erased, but the usability is improved.

The description of each embodiment described above is performed to illustrate the present invention, and is not to be construed to limit the invention specified in the Claims, or to reduce the scope. Also, the structure of each portion of the present invention is not limited to the above-described embodiments, but various modifications within technical ranges specified in the Claims are possible as a matter of course.

As described above, the following effects can be obtained by using a recording and playback apparatus according to the present invention.

Even in any other combination than the combination between the recording and playback apparatus in question and a magnetic tape recorded by the recording and playback apparatus in question, it is possible to rebuild the information signals of the magnetic tape in a memory by reading the information signals from the magnetic tape. In the case of playing back a magnetic tape recorded by another recording and playback apparatus, or even when the user additionally buys a new recording and playback apparatus, the foregoing library function can be exhibited.

Tape identification information stored in a memory placed in a cassette or information signals indicating the contents of a tape are recorded and played back, whereby the information signals (information indicating the contents of the tape) recorded in the memory within the recording and playback apparatus can be read out immediately without playing back the tape to display on the display unit.

By reading tape identification information from a magnetic label or a bar code label pasted on a cassette, it is possible to display on the display unit immediately at the time of insertion into the cassette.

A predetermined length of the tape is played back from a retrieval signal detection position provided on the tape, and an operation of feeding the tape to the next retrieval signal at high speed is repeatedly performed from the beginning to the end of the tape automatically, whereby it is possible to rebuild the information signals in a memory at high speed.

Information signals in a memory built into one recording and playback apparatus are recorded in a magnetic tape, and these information signals are played back by the other recording and playback apparatus to be stored in a memory of the other apparatus, whereby the use of information signals can be shared between different recording and playback apparatuses.

Information signals are replaced with video signals for recording, whereby the recording and playback speed of information signals can be increased, and copying of information signals can be performed immediately.

When an un-adaptable tape having no information signals recorded thereon is played back, the user can learn immediately whether or not the contents of the tape are not displayed at a glance owing to system trouble.

If the information data within the memory have continuously been in a non-access state for a predetermined time period or more, the information data in question are automatically erased, whereby it is possible to prevent the memory from overflowing. Also, as regards important information data for the user, it is possible to prevent them from being automatically erased by protecting the information data for each tape number.

The invention may be embodied in other specific forms without departing from the spirit or essential characteristics thereof. The present embodiment is therefore to be considered in all respects as illustrative and not restrictive, the scope of the invention being indicated by the appended claims rather than by the forgoing description and all changes which come within the meaning and range of equivalency of the claims are therefor intended to be embraced therein.

## Claims

1. A recording and playback apparatus for recording and playing back a video signal and an information signal onto a first recording medium (20), comprising:
recording medium identifying means (7, 9) for identifying said first recording medium (20) through said information signal played back from said first recording medium (20);
means for writing said information signal into a second recording medium (10,28);
means for reading out said information signal from said second recording medium (10,28); and
means (15) for outputting to a display unit (46) said information signal read out from said second recording medium (10),
if identification result of said recording medium identifying means (7,9) could be checked against contents recorded in said second recording medium (10,28), said information signal being read out from said second recording medium (10,28) to output it to said display unit (46), and
if the identification result of said recording medium identifying means (7, 9) could not be checked against contents recorded in said second recording medium (10,28), the information signal played back from said first recording medium (20) being written in said second recording medium (10,28).

2. A recording and playback apparatus for recording and playing back a video signal and an information signal in a first recording medium (20), comprising:
recording medium identifying means (7, 9) for identifying said first recording medium (20);
means for writing said information signal into a second recording medium (10);
means for reading out said information signal from said second recording medium (10); and
means (15) for outputting to a display unit (46) said information signal read out from said second recording medium (10),
if identification result of said recording medium identifying means (7,9) could be checked against contents recorded in said second recording medium (10), said information signal being read out from said second recording medium (10) to output it to said display unit (46), and
if the identification result of said recording medium identifying means (7,9) could not be checked against contents recorded in said second recording medium (10), the information signal played back from said first recording medium (20) being written in said second recording medium (10).

3. A recording and playback apparatus according to Claim 2,
wherein said recording medium identifying means (7,9) comprises a second semiconductor memory (51) attached to said first recording medium (51), and memory write/read means (52, 53) for writing and reading out identification information of said first recording medium (50) into said second semiconductor memory (51).

4. A recording and playback apparatus according to Claim 2,
wherein said recording medium identifying means (63) comprises magnetic label (60) attached to said first recording medium (50), and magnetic label write/read means (61,62) for writing and reading out the identification information of said first recording medium (50) onto said magnetic label (60).

5. A recording and playback apparatus according to Claim 2,
wherein said recording medium identifying means (54) comprises bar code label (70) attached to said first recording medium (50), and bar code read means (71,72) for reading out the identification information of said first recording medium (50) from said bar code label (70).

6. A recording and playback apparatus according to Claim 1 or 2,
wherein said first recording medium is magnetic tape (20, 50).

7. A recording and playback apparatus according to Claim 1 or 2,
wherein said first recording medium is a disk-shaped recording medium.

8. A recording and playback apparatus according to Claim 1 or 2,
wherein said second recording medium (10) is a first semiconductor memory.

9. A recording and playback apparatus according to Claim 1 or 2,
wherein said second recording medium (10) is a disk-shaped recording medium.

10. A recording and playback apparatus for recording and playing back a video signal, an audio signal, an information signal and a retrieval signal (94) in magnetic tape (20,83), comprising:
magnetic tape identifying means (7,9) for identifying said magnetic tape (20,83) through said information signal played back from said magnetic tape (20,83);
means for writing said information signal into a first semiconductor memory (10);
means for reading out said information signal from said first semiconductor memory (10); and
means (15) for outputting to a display unit (46) said information signal read out from said first semiconductor memory (10),
if identification result of said magnetic tape identifying means (7,9) could be checked against contents recorded in said first semiconductor memory (10), said information signal being read out from said first semiconductor memory (10) to output it to said display unit (46), and
if the identification result of said magnetic tape identifying means (7,9) could not be checked against contents recorded in said first semiconductor memory (10), the information signal played back from said magnetic tape (20,83) being written in said first semiconductor memory (10).

11. A recording and playback apparatus according to Claim 10, further comprising:
retrieval signal (94) detecting means (80,81,84,85,90) for detecting said retrieval signal from said magnetic tape (20,83); and
magnetic tape positioning means (12,13) for causing said magnetic tape (20,83) to travel to a position, in which said retrieval signal (94) can be detected, for positioning,
said magnetic tape (20,83) being played back from the position, in which said retrieval signal (94) can be detected, and said information signal played back being written in said first semiconductor memory (10) by said write means (13).

12. A recording and playback apparatus according to Claim 11,
wherein said write means (13) for writing said information signal played back from said magnetic tape (20,83) into said first semiconductor memory (10) sequentially and automatically writes all information signals recorded in said magnetic tape (20, 83) in said first semiconductor memory (10).

13. A recording and playback apparatus according to Claim 1 or 2,
wherein said information signal consists of plural types of signals, and there is provided means for recording these signals in one or more areas of said first recording medium (20).

14. A recording and playback apparatus according to Claim 10,
wherein said information signal consists of information signals for a reel of said magnetic tape, and there is provided means for recording these signals in one or more areas of said magnetic tape.

15. A recording and playback apparatus according to Claim 1 or 2,
wherein information signals (31,32,33) in a plurality of first recording media (20) are stored in said second recording medium (28),
wherein there are provided selecting means (103) for selecting a desired first recording medium (20) from a plurality of first recording media displayed on said display unit (46),
and means for recording information signals of said first recording medium (20) selected by said selecting means (103) in one or more areas (100,104) of said first recording medium (20),
and wherein an information signal played back from said first recording medium (20) is written in said second recording medium (28).

16. A recording and playback apparatus according to Claim 10,
wherein information signals (31,32,33) in a plurality of reels of magnetic tape (20) are written in said first semiconductor memory (28),
wherein there are provided selecting means (103) for selecting a desired magnetic tape (20) from a plurality of reels of magnetic tape displayed on said display unit (46),
and means for recording information signals of said magnetic tape (20) selected by said selecting means (103) in one or more areas (100,104) of said magnetic tape (20),
and wherein an information signal played back from said magnetic tape (20) is written in said first semiconductor memory (28).

17. A recording and playback apparatus according to Claim 13 or 14,
wherein means for recording said information signal in said first recording medium or said magnetic tape (20) is provided with information signal recording means (3,6) for replacing said information signal with said video signal, or multiplexing said information signals onto said video signal for recording.

18. A recording and playback apparatus according to Claim 1 or 10,
wherein said recording medium identifying means or said magnetic tape identifying means (7,9) is provided, if said information signal cannot be detected from said first recording medium or said magnetic tape (20), with means (15) for outputting that result (111).

19. A recording and playback apparatus according to Claim 1, 2 or 10,
wherein of information signals written in said second recording medium or said first semiconductor memory (10), an information signal, which has not been read out for a predetermined period of time or more, is automatically erased (120).

20. A recording and playback apparatus according to Claim 19,
wherein of information signals written in said second recording medium (10), there is provided protect means (121) for making a desired information signal non-erasable.

21. A recording and playback apparatus according to Claim 1, 2 or 10,
wherein said second recording medium or said first semiconductor memory (10) is incorporated in said recording and playback apparatus.
